Europäisches Patentamt

European Patent Office

Office européen des brevets

(11) Numéro de publication: **0 389 343**
**A1**

# DEMANDE DE BREVET EUROPEEN

(21) Numéro de dépôt: **90400715.0**

(22) Date de dépôt: **16.03.90**

(51) Int. Cl.5: **G01S 7/40**

(30) Priorité: **21.03.89 FR 8903675**

(43) Date de publication de la demande:
**26.09.90 Bulletin 90/39**

(84) Etats contractants désignés:
**ES GB IT**

(71) Demandeur: **THOMSON-CSF**
**51, Esplanade du Général de Gaulle**
**F-92800 Puteaux(FR)**

(72) Inventeur: **Nivelet, Serge**
**THOMSON-CSF SCPI Cédex 67**
**F-92045 Paris la Défense(FR)**

(74) Mandataire: **Beylot, Jacques et al**
**Thomson-CSF SCPI**
**F-92045 Paris La Defense Cédex 67(FR)**

(54) **Procédé de télésurveillance des éléments rayonnants d'antenne d'un radar secondaire de surveillance, et dispositif pour sa mise en oeuvre.**

(57) Le procédé consiste à mesurer le diagramme de rayonnement de l'antenne directive et rotative d'interrogation du radar secondaire de surveillance (10) et à comparer le résultat de la mesure avec des valeurs de consigne. La mesure s'effectue au moyen d'un générateur de signal haute fréquence constitué d'un transpondeur de test (30) placé à proximité du radar secondaire de surveillance (10) et interrogé dans la plupart des directions d'orientation de l'antenne d'interrogation au moyen d'une configuration particulière d'impulsions émise par l'antenne quasi omnidirectionnelle de contrôle. La configuration particulière d'impulsions peut être formée d'une paire d'impulsions successives (Po, P2), la deuxième impulsion (P2) de la paire étant une impulsion de suppression des réponses aux interrogations par les lobes secondaires.

EP 0 389 343 A1

FIG_4

# PROCEDE DE TELESURVEILLANCE DES ELEMENTS RAYONNANTS D'ANTENNE D'UN RADAR SECONDAIRE DE SURVEILLANCE ET DISPOSITIF POUR SA MISE EN OEUVRE

Les radars secondaires de surveillance font partie de systèmes coopératifs sol avion qui permettent de situer les avions présents dans un certain volume en distance radiale et azimut, et de les interroger pour leur faire décliner leur identité et leur altitude. Un radar secondaire de surveillance émet par une antenne directive rotative des impulsions d'interrogation modulées en amplitude à la fréquence de 1030 MHz et destinées à des transpondeurs embarqués à bord d'avion qui doivent répondre par des trains d'impulsions modulées en amplitude à la fréquence 1090 MHz. L'orientation de l'antenne du radar secondaire de surveillance au moment de la réponse d'un avion donne l'azimut de l'avion et le délai de réponse la distance radiale. Chaque interrogation est formée d'une paire d'impulsions dites P1, P3 séparées d'un intervalle de temps caractéristique d'un mode particulier d'interrogation. Ainsi, un intervalle de temps de 8 $\mu$s entre les impulsions P1, P3 d'interrogation correspond à un mode A auquel le transpondeur d'un avion doit répondre par un mot d'identification et un intervalle de temps de 21 $\mu$s entre les impulsions P1, P3 à un mode C auquel le transpondeur d'un avion doit répondre par une valeur d'altitude. La séquence d'interrogation d'un radar secondaire de surveillance est normalement en modes entrelacés de type ACAC de manière à interroger les avions alternativement sur leur identité et leur altitude.

L'antenne d'interrogation avec laquelle le radar secondaire de surveillance émet les impulsions d'interrogation et reçoit les trains d'impulsions de réponse des transpondeurs présente un lobe principal directif entouré de lobes latéraux. Pour éviter qu'un transpondeur à bord d'un avion proche réponde aux impulsions émises par les lobes secondaires de l'antenne d'interrogation, la paire d'impulsions P1, P3 d'interrogation est complétée par une troisième impulsion intercalée, dite P2 ou de suppression des réponses aux interrogations par les lobes secondaires et émise par une antenne de contrôle ayant un diagramme de rayonnement quasi omnidirectionnel recouvrant les lobes latéraux et ne laissant dépasser que le lobe principal de l'antenne d'interrogation. Les transpondeurs sont rendus sensibles uniquement aux interrogations reçues dans lesquelles l'amplitude de l'impulsion P2 de suppression des réponses aux interrogations par les lobes secondaires est inférieure aux amplitudes des deux autres impulsions P1, P3 d'interrogation.

Les antennes d'interrogation et de contrôle d'un radar secondaire de surveillance sont en général réalisées à partir d'un réseau d'éléments rayonnants en rotation dont il importe de pouvoir vérifier à tout instant le bon fonctionnement.

Il est connu de vérifier le bon fonctionnement des éléments rayonnants d'un radar secondaire de surveillance en mesurant le diagramme de rayonnement en réception de l'antenne d'interrogation grâce à un générateur de signaux haute fréquence constitué d'un transpondeur fixe de test, sans fonction de suppression des réponses aux interrogations par les lobes secondaires, placé à proximité et répondant à une interrogation dans un mode B qui n'est plus usité. Dans ces conditions, le radar secondaire de surveillance émet une séquence d'interrogation modifiée du genre ABC ABC pour obtenir des réponses du transpondeur de test combinées avec les réponses des transpondeurs embarqués à bord d'avions.

Cela a divers inconvénients aussi bien pour le radar secondaire de surveillance considéré que pour les radars secondaires de surveillance ayant une couverture sécante.

La modification de la séquence d'interrogation pour y intercaler les interrogations supplémentaires destinées au transpondeur de test augmente la pollution radioélectrique de l'espace aérien et fait croître le nombre des réponses indésirables des transpondeurs.

La présence d'une impulsion P2 de suppression des réponses aux interrogations par les lobes secondaires dans les interrogations supplémentaires en mode B augmente le temps d'indisponibilité des transpondeurs embarqués à bord d'avions qui se bloquent un court instant à chacune des interrogations leur parvenant par les lobes secondaires de l'antenne d'interrogation.

En outre, le transpondeur de test n'ayant pas de fonction de suppression des réponses aux interrogations par les lobes secondaires est rendu très sensible à des interrogations parasites pouvant soit résulter d'un phénomène de trajets multiples soit provenir de radars secondaires de surveillance voisins ayant une couverture sécante.

La présente invention a pour but de lutter contre ces divers inconvénients.

Elle a pour objet un procédé de télésurveillance des éléments rayonnants d'antenne d'un radar secondaire de surveillance formant d'une part une antenne d'interrogation directive et rotative ayant un diagramme de rayonnement avec un lobe principal directif entouré de lobes secondaires et d'autre part une antenne de contrôle quasi omnidirectionnelle ayant un diagramme de rayonnement recouvrant les lobes latéraux et ne laissant dépasser que le lobe principal de l'antenne d'interrogation, le radar secondaire de surveillance émettant par son antenne d'interrogation des paires d'impulsions d'interrogation destinées à des transpondeurs situés dans la zone de couverture de la dite antenne d'interrogation et par son antenne de contrôle des impulsions de suppression des réponses aux interrogations par les lobes secondaires intercalées dans le temps avec les impulsions d'interrogation pour permettre aux transpondeurs de mettre en oeuvre une fonction de suppression des réponses aux interrogations par les lobes secondaires de l'antenne d'interrogation, et recevant par son antenne d'interrogation les réponses formées de trains d'impulsions provenant de transpondeurs illuminés par la dite antenne d'interrogation. Ce procédé consiste à mesurer le diagramme de rayonnement de l'antenne d'interrogation et à comparer le résultat de la mesure avec des valeurs de consigne. Cette mesure s'effectue au moyen d'un générateur haute fréquence constitué d'un transpondeur de test placé à proximité et interrogé dans la plupart des directions d'orientation de l'antenne d'interrogation. Le procédé est remarquable en ce que le transpondeur de test est interrogé au moyen d'une configuration particulière d'impulsions émise par l'antenne de contrôle.

L'utilisation de l'antenne de contrôle quasi omnidirectionnelle pour l'interrogation du transpondeur de test permet d'optimiser le bilan de puissance de la liaison interrogateur-transpondeur pour les orientations correspondant aux lobes secondaires de l'antenne d'interrogation. Il n'est plus nécessaire d'avoir un récepteur d'une très grande sensibilité dans le transpondeur de test puisque l'on ne cherche plus à recevoir les impulsions de faible puissance émises par les lobes secondaires de l'antenne d'interrogation mais les impulsions de puissance à peu près uniforme émises par l'antenne de contrôle quasi omnidirectionnelle. Le taux de réponse du transpondeur de test est ainsi augmenté pour la plupart des orientations de l'antenne d'interrogation en même temps que sont supprimées les réponses parasites.

Selon un mode préféré de mise en oeuvre, la configuration particulière d'impulsions émise par l'antenne de contrôle pour interroger le transpondeur de test est constituée de deux impulsions successives séparées par un intervalle de temps distinct de ceux pouvant séparer une paire d'impulsions d'interrogation émise par l'antenne d'interrogation, la deuxième impulsion étant une impulsion de suppression des réponses aux interrogations par les lobes secondaires normalement intercalée entre une paire d'impulsions d'interrogation émise par l'antenne d'interrogation.

L'interrogation du transpondeur de test se fait alors grâce à l'émission par l'antenne de contrôle d'une seule impulsion supplémentaire qui ne provoque aucune réponse de la part des transpondeurs autres que celui de test et qui ne déclenche pas leur fonction de suppression des réponses aux interrogations par les lobes secondaires.

L'invention a également pour objet un dispositif de mise en oeuvre du procédé précédent.

D'autres caractéristiques et avantages de l'invention ressortiront de la description d'un mode de mise en oeuvre donné à titre d'exemple. Cette description sera faite en regard du dessin dans lequel:
- la figure 1 montre les diagrammes de rayonnement des antennes d'interrogation et de contrôle d'un radar secondaire de surveillance,
- la figure 2 illustre la forme d'un signal d'interrogation lorsqu'il provient du lobe principal de l'antenne d'interrogation d'un radar secondaire de surveillance,
- la figure 3 illustre la forme d'un signal d'interrogation lorsqu'il provient d'un lobe secondaire de l'antenne d'interrogation d'un radar secondaire de surveillance et
- la figure 4 représente le schéma d'une chaîne de mesure automatique pour la télésurveillance d'un radar secondaire de surveillance.

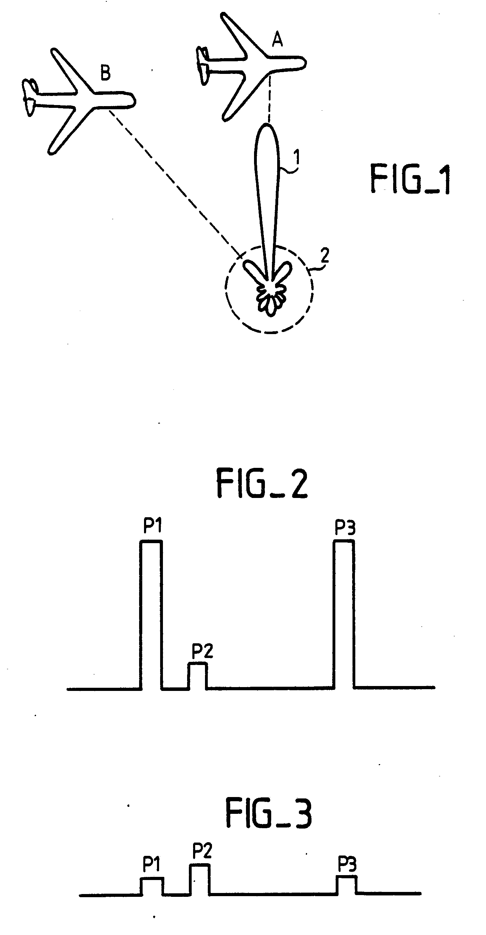

La figure 1 montre les diagrammes de rayonnement des antennes d'interrogation et de contrôle d'un radar secondaire de surveillance. La courbe 1 en traits pleins représente le diagramme de rayonnement de l'antenne rotative d'interrogation avec un lobe principal directif entouré de lobes latéraux résiduels. La courbe 2 en tiretets représente le diagramme de rayonnement omnidirectionnel ou quasi omnidirectionnel de l'antenne de contrôle qui recouvre les lobes latéraux et ne laisse dépasser que le lobe principal de l'antenne d'interrogation.

Le radar secondaire de surveillance émet par son antenne directive et rotative d'interrogation, à une cadence de 40 à 400 Hz des paires d'impulsions d'interrogation P1, P3 de 0,8 $\mu$s de large, modulées en amplitude à la fréquence de 1030 MHz et destinées à des transpondeurs embarqués à bord d'avions A et B qui doivent répondre par un train d'impulsions de 0,45 $\mu$s de large, modulées en amplitude à la fréquence de 1090 MHz. Les impulsions P1, P3 de chaque paire d'impulsions d'interrogation sont séparées d'un intervalle de temps caractéristique d'un mode particulier d'interrogation. Ainsi un intervalle de temps de 8 $\mu$s entre les impulsions P1, P3 d'interrogation correspond à un mode A auquel un transpondeur doit répondre par un mot d'identification et un intervalle de temps de 21$\mu$s entre les impulsions P1, P3 d'interrogation à un mode C auquel un transpondeur doit répondre par une valeur d'altitude délivrée par un alticodeur. La séquence d'interrogation émise par un radar secondaire de surveillance est normalement constituée de modes entrelacés du genre ACAC de manière à interroger les transpondeurs alternativement sur leur identité et leur altitude.

Le radar secondaire de surveillance émet en outre, par son antenne de contrôle, des impulsions P2 de suppression des réponses aux interrogations par les lobes secondaires de l'antenne d'interrogation. Ces impulsions P2 de même largeur que celles d'interrogation P1, P3 s'intercalent une à une dans chaque paire d'impulsions P1, P2 d'interrogation avec un retard de 2 μs sur l'impulsion P1. Elles permettent, par comparaison de leur amplitude avec celle des impulsions P1, P3 d'interrogation, de distinguer depuis un transpondeur les interrogations provenant du lobe principal de l'antenne d'interrogation de celles provenant des lobes secondaires. La figure 2 illustre la forme d'un signal d'interrogation émis par le lobe principal de l'antenne d'interrogation qui correspond par exemple à celui reçu par le transpondeur embarqué à bord de l'avion A représenté à la figure 1. Dans ce cas, qui est celui où le transpondeur doit répondre, l'amplitude de la paire d'impulsions P1, P3 d'interrogation est supérieure à celle de l'impulsion P2 de suppression des réponses aux interrogations par les lobes secondaires car le gain de l'antenne d'interrogation est très supérieure dans cette direction à celui de l'antenne de contrôle. La figure 3 illustre la forme d'un signal d'interrogation émis par un lobe secondaire de l'antenne d'interrogation qui correspond par exemple à celui reçu par le transpondeur embarqué à bord de l'avion B représenté à la figure 1. Dans ce cas qui est celui où le transpondeur ne doit pas répondre, l'amplitude de la paire d'impulsions P1, P3 d'interrogation est inférieure à celle de l'impulsion P2 de suppression des réponses aux interrogations par les lobes secondaires car le gain de l'antenne d'interrogation est inférieur dans cette direction à celui de l'antenne de contrôle.

Au sein de chaque transpondeur, un dispositif de suppression des réponses aux interrogations par les lobes secondaires compare les amplitudes des impulsions P1 et P2 reçues. Il n'autorise une réponse que lorsque le niveau reçu de l'impulsion d'interrogation P1 est supérieur au niveau reçu de l'impulsion P2 de suppression des réponses aux interrogations par les lobes secondaires. Dans le cas contraire, il bloque le transpondeur le temps d'une réponse c'est-à-dire sur une durée de l'ordre de 35 μs.

On se propose de vérifier le bon fonctionnement des éléments rayonnants d'antenne d'un radar secondaire de surveillance. Pour cela on prévoit de mesurer le diagramme de rayonnement en réception de l'antenne d'interrogation au moyen d'un générateur de signal haute fréquence de puissance constante dont on mesure la variation de la puissance reçue par l'antenne d'interrogation en fonction de l'orientation de cette dernière. Ce générateur de signal haute fréquence est un transpondeur dit de test placé à une certaine distance du radar secondaire de surveillance qui sert par ailleurs à la calibration et au contrôle des performances globales du radar secondaire de surveillance selon les recommandations de l'Organisation Internationale de l'Aviation Civile (OACI). Le récepteur de mesure est celui du radar secondaire de surveillance lui-même.

Pour interroger le transpondeur de test afin qu'il fonctionne en générateur de signal haute fréquence alors qu'il n'est pas illuminé par le lobe principal de l'antenne d'interrogation on utilise une configuration spéciale d'impulsions émises par le radar secondaire de surveillance sur son antenne de contrôle. Cette configuration consiste en une paire d'impulsions de 0,8 μs de large modulées en amplitude à la fréquence de 1030 MHz et séparées par un intervalle de temps de 12 μs. La deuxième impulsion est une impulsion P2 de suppression de réponses aux interrogations par les lobes secondaires intercalée dans une paire d'impulsions d'interrogation tandis que la première est une nouvelle impulsion dite Po.

Cette nouvelle impulsion Po a l'avantage de ne pas provoquer de réponse de la part des transpondeurs autres que celui de test car elle est séparée des autres impulsions émises en modulation d'amplitude à 1030 MHz par des intervalles de temps dont les durées ne correspondent à aucune de celles des intervalles de temps entre les impulsions des modes usuels d'interrogation. N'apparaissant pas entre une paire d'impulsions d'interrogation, elle ne déclenche pas dans les transpondeurs les dispositifs de suppression des réponses aux interrogations par les lobes secondaires. En outre elle s'intercale aisément dans l'intervalle de temps de plus de 2,5 ms qui sépare deux modes d'interrogation successifs et ne nécessite pas des modifications de la séquence d'interrogation.

Le transpondeur de test possède, comme les autres transpondeurs un dispositif de suppression des réponses aux interrogations par les lobes secondaires. Il répond normalement aux paires d'impulsions de 0,8 μs de large modulées en amplitude à la fréquence de 1030 MHz, séparées par les intervalles de temps de 8 et 21 μs des interrogations conventionnelles en modes A et C et reçues avec une amplitude supérieure à celle d'une impulsion intercalaire de suppression des réponses aux interrogations par les lobes secondaires. Il répond également de manière plus spécifique, à la réception d'une paire d'impulsions de 0,8 μs de large, modulées en amplitude à la fréquence de 1030 MHz et séparées par un intervalle de 12 μs qui constitue la configuration spéciale d'impulsions émise à son intention par le radar secondaire de surveillance. Dans ce cas, il engendre une réponse 6 μs après la deuxième impulsion.

Pour pallier un éventuel creux dans le diagramme quasi omnidirectionnel de l'antenne de contrôle au droit du lobe principal de l'antenne d'interrogation le dispositif de suppression des réponses aux interrogations par les lobes secondaires du transpondeur de test est inhibé pour les seize interrogations en modes conventionnels reçues consécutivement après une configuration spéciale d'impulsions constituée, comme indiqué précédemment d'une paire d'impulsions de 0,8 μs de large modulées en amplitude à la fréquence de 1030 MHz et séparées par un intervalle de temps de 12 μs.

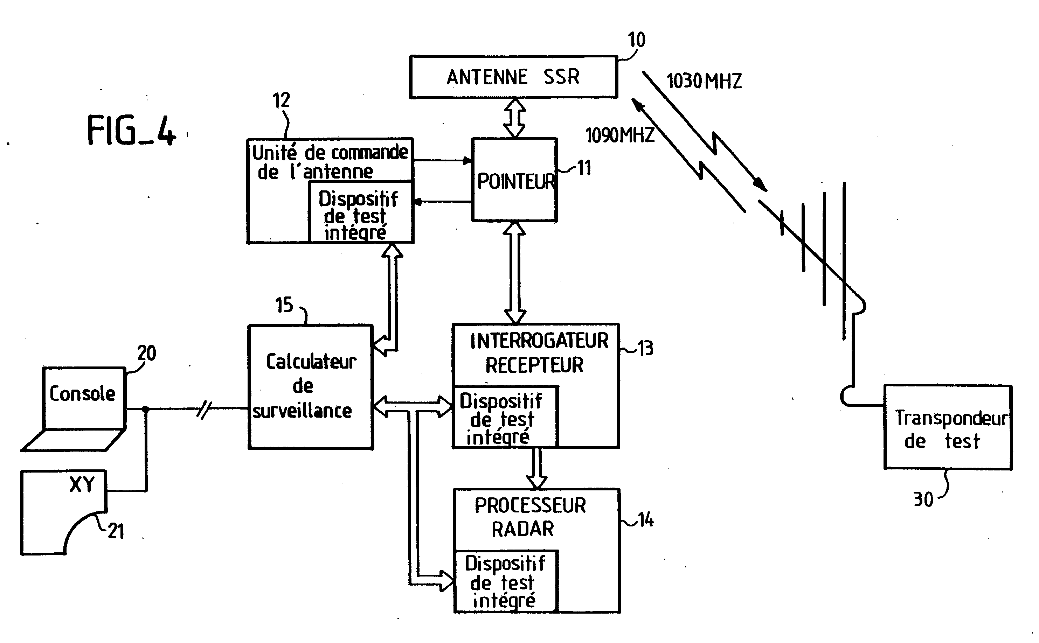

La figure 4 illustre le schéma d'une chaîne de mesure automatique pour la télésurveillance d'un radar secondaire de surveillance. Les éléments de celles-ci sont répartis entre la station du radar secondaire de surveillance, un site déporté où est localisé le transpondeur de test et un centre de maintenance commun à plusieurs radars secondaires de surveillance.

On distingue, à la station de radar secondaire de surveillance, un ensemble d'éléments rayonnants d'antenne rotative 10 monté sur un pointeur 11 comportant un plateau tournant associé à un joint tournant haute fréquence et à un codeur angulaire, une unité de commande 12 d'antenne pilotant le pointeur 11, un interrogateur récepteur 13 relié aux éléments rayonnants d'antenne 10 par l'intermédiaire du pointeur 11 et un processeur radar 14 traitant les signaux délivrés par l'interrogateur récepteur 13.

L'unité de commande 12 d'antenne, l'interrogateur récepteur 13 et le processeur radar 14 sont pourvus de dispositifs de test intégrés connus sous le sigle anglo-saxon BITE (Buit In Test Equipement) reliés par un bus IEEE 488 à un calculateur de surveillance 15 connecté par une liaison genre TRANSPAC à une console 20 formée d'un écran et d'un clavier, et à une imprimante ou une table traçante 21 située au centre de maintenance.

Les dispositifs de test intégrés surveillent les états des équipements auxquels ils sont associés, échangent avec le calculateur de surveillance 15 des informations sur la configuration des équipements, l'état de leurs unités fonctionnelles, la présence de panne, les valeurs de certains paramètres opérationnels et exécutent des télécommandes permettant de modifier la configuration des équipements pour les maintenir en ordre de fonctionnement.

Le dispositif de test intégré à l'interrogateur récepteur 13 comporte outre les éléments destinés à surveiller le bon fonctionnement de l'interrogateur récepteur 13 des moyens d'interrogation du transpondeur de test 30 qui peuvent commander à l'interrogateur récepteur 13 l'émission par l'antenne de contrôle d'une impulsion Po précédant de 12 μs une impulsion P2 de suppression des réponses aux interrogations par les lobes secondaires intercalée entre une paire d'impulsions d'interrogation P1, P3 en mode conventionnel A, et des moyens de mesure des valeurs des niveaux de réception des trains d'impulsions émis en réponse par le transpondeur de test 30.

Le transpondeur de test 30 localisé sur le site déporté est équipé d'une antenne relativement directive telle qu'une antenne Yagi ou une antenne cornet orientée en direction de l'ensemble d'éléments rayonnants d'antenne 10 de la station de radar secondaire de surveillance. Il comporte, en plus des éléments d'un transpondeur traditionnel, des moyens de discrimination des paires d'impulsions modulées en amplitude à la fréquence de 1030 MHz et séparées d'un intervalle de temps de 12 μs, des moyens d'inhibition de la fonction de suppression des réponses aux interrogations par les lobes secondaires sur seize interrogations successives activés par les moyens de discrimination et des moyens de mesure et de codage des niveaux de réception des impulsions reçues modulées en amplitude à la fréquence de 1030 MHz. Il répond constamment en mode altimétrie, le code altimétrie contenu dans le train d'impulsions modulées en amplitude à la fréquence de 1090 MHz constituant sa réponse étant composé pour partie d'un code décrivant son état de fonctionnement et pour le restant du niveau de réception soit de l'une des impulsions d'interrogation P1, P3 pour une interrogation en mode C soit de l'une des impulsions Po, P2 émise par l'antenne de contrôle pour une interrogation en mode A ou pour la configuration spéciale d'impulsions Po, P2.

La mesure du diagramme de rayonnement en réception de l'antenne directive rotative du radar secondaire de surveillance est menée sous la conduite du calculateur de surveillance 15. Pour ce faire, le calculateur de surveillance 15 commande au dispositif de test intégré à l'interrogateur récepteur 13 d'interroger le transpondeur de test 30 à l'aide de la configuration spéciale d'impulsion Po, P2 dans les diverses orientations possibles de l'ensemble des éléments rayonnants d'antenne 10, reçoit de ce dispositif de test intégré les différents niveaux de réception des trains d'impulsions émis en réponse par le transpondeur de test 30, regroupe les valeurs de ces différents niveaux avec les valeurs correspondantes d'azimut de pointage de l'antenne fournies par le dispositif de test intégré à l'unité de commande de l'antenne 12, effectue à l'aide de ces mesures l'analyse des paramètres de rayonnement de l'antenne d'interrogation par comparaison avec des valeurs de consigne et déclenche une alarme en cas d'anomalie. Il peut en outre calculer une estimation de probabilité de défaillance pour chacun des éléments rayonnants d'antenne afin de localiser le ou les éléments rayonnants éventuellement défaillants.

**Revendications**

1. Procédé de télésurveillance des éléments rayonnants d'antenne d'un radar secondaire de surveillance formant d'une part une antenne d'interrogation directive et rotative ayant un diagramme de rayonnement avec un lobe principal directif entouré de lobes secondaires et d'autre part une antenne de contrôle quasi omnidirectionnelle ayant un diagramme de rayonnement recouvrant les lobes latéraux et ne laissant dépasser que le lobe principal de l'antenne d'interrogation, le radar secondaire de surveillance émettant par son antenne d'interrogation des paires d'impulsions d'interrogation destinées à des transpondeurs situés dans la zone de couverture de la dite antenne d'interrogation et par son antenne de contrôle des impulsions de suppression des réponses aux interrogations par les lobes secondaires intercalées dans le temps avec les impulsions d'interrogation pour permettre aux transpondeurs de mettre en oeuvre une fonction de suppression des réponses aux interrogations par les lobes secondaires de l'antenne d'interrogation, et recevant par son antenne d'interrogation les réponses formées de trains d'impulsions provenant des transpondeurs illuminés par la dite antenne d'interrogation, le dit procédé consistant à mesurer le diagramme de rayonnement en réception de l'antenne d'interrogation au moyen d'un générateur haute fréquence constitué d'un transpondeur de test placé à proximité et interrogé dans la plupart des directions d'orientation de l'antenne d'interrogation, et étant caractérisé en ce que le dit transpondeur de test est interrogé au moyen d'une configuration particulière d'impulsions émises par l'antenne de contrôle.

2. Procédé selon la revendication 1, caractérisé en ce que la dite configuration particulière d'impulsions émise par l'antenne de contrôle est constituée d'une paire d'impulsions séparées par un intervalle de temps distinct de ceux pouvant séparer une paire d'impulsions d'interrogation émise par l'antenne d'interrogation.

3. Procédé selon la revendication 2, caractérisé en ce que la deuxième impulsion de chaque paire d'impulsions émises par l'antenne de contrôle pour interroger le transpondeur de test est constituée d'une impulsion de suppression des réponses aux interrogations par les lobes secondaires normalement intercalée entre une paire d'impulsions d'interrogation émise par l'antenne d'interrogation.

4. Procédé selon la revendication 2, caractérisé en ce que les impulsions de chaque paire d'impulsions émises par l'antenne de contrôle pour interroger le transpondeur de test sont séparées de 12 $\mu$s.

5. Procédé selon la revendication 1, caractérisé en ce que le transpondeur de test est également interrogé au moyen des paires d'impulsions d'interrogation émises par l'antenne d'interrogation.

6. Procédé selon la revendication 5, caractérisé en ce que la configuration particulière d'impulsions émise par l'antenne de contrôle provoque la réponse du transpondeur de test et l'inhibition de sa fonction de suppression des réponses aux interrogations par les lobes secondaires pour un certain nombre d'interrogations successives provenant de l'antenne d'interrogation.

7. Procédé selon la revendication 3, caractérisé en ce que l'émission d'une réponse par le transpondeur de test est déclenchée 6 $\mu$s après réception de l'impulsion de suppression des réponses aux interrogations par les lobes secondaires constituant la deuxième impulsion d'une paire d'impulsions émises par l'antenne de contrôle.

8. Dispositif de télésurveillance des éléments rayonnants d'antenne d'un radar secondaire de surveillance formant d'une part une antenne d'interrogation directive et rotative ayant un diagramme de rayonnement avec un lobe principal directif entouré de lobes secondaires et d'autre part une antenne de contrôle quasi omnidirectionnelle ayant un diagramme de rayonnement recouvrant les lobes latéraux et ne laissant dépasser que le lobe principal de l'antenne d'interrogation, le radar secondaire de surveillance étant pourvu de moyens pour émettre par son antenne d'interrogation des paires d'impulsions d'interrogation destinées à des transpondeurs situés dans la zone de couverture de la dite antenne d'interrogation, de moyens pour émettre par son antenne de contrôle des impulsions de suppression des réponses aux interrogations par les lobes secondaires intercalées dans le temps avec les impulsions d'interrogation pour permettre aux transpondeurs de mettre en oeuvre une fonction de suppression des réponses aux interrogations par les lobes secondaires de l'antenne d'interrogation, et des moyens pour recevoir par l'antenne d'interrogation les réponses formées de trains d'impulsions provenant des transpondeurs illuminés par l'antenne d'interrogation, les dits transpondeurs étant pourvus de moyens de reconnaissance des paires d'impulsions d'interrogation, de moyens de réponse par des trains d'impulsions aux paires d'impulsions d'interrogation et de moyens d'inhibition des réponses aux interrogations par les lobes latéraux de l'antenne d'interrogation, le dit dispositif comportant des moyens pour mesurer le diagramme de rayonnement en réception de l'antenne d'interrogation incluant un générateur de signal haute fréquence constitué d'un transpondeur de test placé à proximité du radar secondaire de surveillance et interrogé dans la plupart des directions d'orientation de l'antenne d'interrogation, et étant caractérisé en ce qu'il comporte, dans le radar secondaire de surveillance des moyens pour émettre par l'antenne de contrôle une configuration particulière d'impulsions et, dans le transpondeur de test des moyens pour reconnaître la dite configuration particulière d'impulsions et déclencher les moyens de réponse.

9. Dispositif selon la revendication 8, caractérisé en ce que les dits moyens pour émettre par l'antenne de contrôle une configuration particulière d'impulsions émettent des paires d'impulsions, les impulsions d'une paire étant séparées par un intervalle de temps distinct de ceux pouvant séparer les impulsions d'une paire d'impulsions d'interrogation.

10. Dispositif selon la revendication 9, caractérisé en ce que la deuxième impulsion d'une paire d'impulsions émise par les moyens pour émettre par l'antenne de contrôle une configuration particulière d'impulsions est constituée d'une impulsion de suppression des réponses aux interrogations par les lobes secondaires normalement intercalée dans le temps entre une paire d'impulsions d'interrogation.

11. Dispositif selon la revendication 8, caractérisé en ce que les dits moyens pour émettre par l'antenne de contrôle une configuration particulière d'impulsions émettent des paires d'impulsions, les impulsions d'une paire se succédant à 12 $\mu$s d'intervalle.

12. Dispositif selon la revendication 8, caractérisé en ce que le transpondeur de test est pourvu de moyens d'inhibition de sa fonction de suppression des réponses aux interrogations par les lobes secondaires sur un certain nombre d'interrogations successives activés par les moyens pour reconnaître la dite configuration d'impulsions.

13. Dispositif selon la revendication 10, caractérisé en ce que le transpondeur de test est pourvu de moyens pour reconnaître la dite configuration d'impulsions déclenchant les moyens de réponse 6 $\mu$s après réception de l'impulsion de suppression des réponses aux interrogations par les lobes secondaires constituant la deuxième impulsion d'une paire d'impulsions émises par les moyens pour émettre par l'antenne de contrôle une configuration particulière d'impulsions.

FIG_1

FIG_2

FIG_3

FIG_4

ANTENNE SSR — 10

1030 MHZ

1090 MHZ

12

Unité de commande
de l'antenne

Dispositif
de test
intégré

POINTEUR — 11

15

Calculateur
de
surveillance

20

Console

XY

21

INTERROGATEUR
RECEPTEUR — 13

Dispositif
de test
intégré

PROCESSEUR
RADAR — 14

Dispositif
de test
intégré

Transpondeur
de test

30

EP 0 389 343 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 194 407  (MARCONI) <br> * Page 1, ligne 121 - page 2, ligne 48; page 4, lignes 12-40 .* <br> --- | 1-13 | G 01 S    7/40 |
| A | US-A-4 540 986  (BYRNE) <br> * Colonnes 1,2 * <br> --- | 1-13 | |
| A | EP-A-0 223 961  (ALLIED CORP.) <br> * Page 3, lignes 10-30 * <br> --- | 1,8 | |
| A | DE-C-1 960 904  (SIEMENS) <br> * En entier * <br> --- | 1-13 | |
| A | GB-A-1 594 231  (PLESSEY) <br> --- | | |
| A | BE-A-  472 839  (WESTINGHOUSE) <br> ----- | | |

**DOMAINES TECHNIQUES RECHERCHES (Int. Cl.5)**

G 01 S

Le présent rapport a été établi pour toutes les revendications

| Lieu de la recherche | Date d'achèvement de la recherche | Examinateur |
|---|---|---|
| LA HAYE | 29-06-1990 | DEVINE J.J |

EPO FORM 1503 03.82 (P0402)